# FASCICULE DE BREVET EUROPEEN

(11) **EP 4 438 486 B1**
(45) Date de publication et mention de la délivrance du brevet: **03.09.2025**
(21) Numéro de dépôt: 24166214.7
(22) Date de dépôt: 26.03.2024
(51) Int. Cl.: B64D 27/40, B64D 27/18

(54) **ENSEMBLE PROPULSIF POUR AÉRONEF COMPORTANT UN TURBORÉACTEUR, UN MÂT ET DES MOYENS D'ACCROCHAGE DU TURBORÉACTEUR AU MÂT**
ANTRIEBSEINHEIT FÜR EIN FLUGZEUG MIT EINEM TURBINTRIEBWERK, EINEM MAST UND MITTELN ZUM EINRASTEN DES TURBINTRIEBWERKS AN DEN MAST
PROPULSION ASSEMBLY FOR AN AIRCRAFT COMPRISING A TURBOJET ENGINE, A PYLON AND MEANS FOR COUPLING THE TURBOJET ENGINE TO THE PYLON

(30) Priorité: 30.03.2023 FR 2303095
(43) Date de publication de la demande: 02.10.2024
(73) Titulaire: AIRBUS OPERATIONS (S.A.S.), 31060 Toulouse (FR)
(72) Inventeur: PAUTIS, Olivier, 31060 TOULOUSE (FR); COLMAGRO, Jérôme, 31060 TOULOUSE (FR); AGOSTINI, Laurent, 31300 TOULOUSE (FR)
(74) Mandataire: Airbus-OPS SAS

(56) Documents cités:
- EP-A1- 4 124 575
- WO-A1-2013/050715
- WO-A1-2014/174222
- US-A1- 2021 070 459

## Description

### DOMAINE TECHNIQUE

La présente invention se rapporte au domaine général de l'accrochage d'un turboréacteur sous la voilure d'un aéronef. Elle concerne en particulier un ensemble propulsif comprenant un turboréacteur, en particulier à double flux, un mât ainsi qu'un dispositif d'accrochage destiné à l'accrochage du turboréacteur sous le mât. Elle concerne également un aéronef équipé d'un tel ensemble propulsif.

### ÉTAT DE LA TECHNIQUE ANTÉRIEURE

Un ensemble propulsif de l'état de la technique est fixé sous une voilure d'un aéronef qui comporte un turboréacteur et un mât d'accrochage par l'intermédiaire duquel le turboréacteur est fixé sous la voilure. Globalement, le mât d'accrochage comporte une structure rigide, également appelée structure primaire, portant des premiers éléments de fixation destinés à l'accrochage du turboréacteur.

Ces premiers éléments de fixation sont formés d'une attache moteur avant, d'une attache moteur arrière, et d'un dispositif de reprise des efforts de poussée générés par le turboréacteur.

Le mât d'accrochage comporte en outre des seconds éléments de fixation permettant la fixation du mât d'accrochage à la voilure.

Le turboréacteur comporte à l'avant un carter de soufflante entourant un canal annulaire de soufflante, et vers l'arrière un carter central de plus petite dimension, renfermant le cœur du turboréacteur.

Dans le cas d'une architecture de mât réacteur dite « Core », l'attache moteur avant est interposée entre une extrémité avant de la structure rigide et une partie supérieure et avant du carter central dit « core casing » en anglais et l'attache moteur arrière est interposée entre la structure rigide et une partie supérieure et arrière du même carter central. Le dispositif de reprise des efforts de poussée générés par le turboréacteur comprend deux bielles disposées de part et d'autre d'un plan vertical médian du turboréacteur et articulées, d'une part, sur le carter central, et, d'autre part, sur un palonnier unique fixé à la structure rigide. Le dispositif de reprise des efforts de poussée qui est formé par les deux bielles et le palonnier est conçu pour reprendre l'intégralité ou la majorité des efforts orientés selon la direction longitudinale X du turboréacteur.

L'attache moteur avant comporte de part et d'autre du mât une bielle, et chaque bielle est fixée de manière articulée par une de ses extrémités au mât et est fixée de manière articulée par l'autre de ses extrémités au carter central. L'une des bielles est fixée par deux points de liaison au mât et par un point de liaison au carter central, et la deuxième bielle est fixée par un point de liaison au mât et par un point de liaison au carter central.

L'attache moteur avant permet de reprendre, en son plan, une partie des efforts orientés selon les directions Y et Z ainsi qu'un moment de torsion Mx. L'attache moteur arrière comporte une manille triangulaire qui est fixée de manière articulée par une de ses extrémités supérieures au mât et est fixée de manière articulée par une de ses extrémités inférieures au moteur. Cette manille triangulaire est donc composée d'un point de liaison supérieur côté mât et positionné sur le plan médian du mât sous sa paroi inférieure et de deux points inférieurs côté moteur et positionnés de part et d'autre du plan médian du mât sur le carter moteur. Un tel arrangement permet également de reprendre, en son plan, une partie des efforts orientés selon les directions Y et Z.

Le document US2021070459 décrit un système de montage d'un moteur sur un aéronef comprenant différents éléments et liaisons de sorte de coupler des parties du moteur avec le mât. Ainsi, le système réagit à tous les moments majeurs agissant sur le moteur tout en ne s'étendant pas au-delà de la périphérie extérieure du carter de fan.

Bien qu'une telle structure donne satisfaction, il est souhaitable de trouver un arrangement alternatif qui permet une diminution de l'encombrement des attaches moteur, notamment lorsque celles-ci deviennent les éléments de contraintes pour la définition des capotages définissant les formes aérodynamiques aussi bien internes qu'externes de la turbomachine.

### EXPOSÉ DE L'INVENTION

Un objet de la présente invention est de proposer un ensemble propulsif comprenant un turboréacteur, un mât et un dispositif d'accrochage destiné à l'accrochage du turboréacteur sous le mât avec un encombrement réduit.

À cet effet, est proposé un ensemble propulsif d'un aéronef, ledit ensemble propulsif comportant :
- un turboréacteur comportant un carter présentant de l'avant vers l'arrière, un carter intermédiaire et un carter central autour d'un axe longitudinal et présentant un plan médian vertical passant par l'axe longitudinal, où le carter central s'étend à l'arrière du carter intermédiaire et présente un diamètre inférieur pour dégager une face arrière du carter intermédiaire,
- un mât d'accrochage présentant une structure rigide avec une paroi frontale et deux parois latérales de part et d'autre du plan médian,
- une attache moteur avant comportant une ferrure avant positionnée autour et au-dessus du carter central et à l'arrière du carter intermédiaire, où la ferrure avant est fixée de manière articulée par deux points latéraux de fixation à la face arrière et de manière rigide par une zone supérieure de fixation à la paroi frontale, où la zone supérieure de fixation est disposée en partie haute au niveau du plan médian, et où les points latéraux de fixation sont disposés de part et d'autre du plan médian, et
- une attache moteur intermédiaire comprenant deux paires de bielles où chaque paire est disposée d'un côté du plan médian et comporte une bielle avant et une bielle arrière où chacune est montée articulée entre la ferrure avant et la paroi latérale de la structure rigide qui est du même côté.

Avec un tel arrangement, l'encombrement des attaches moteur est réduit dans le flux secondaire.

Avantageusement, chaque point latéral de fixation assure une liaison pivot dont l'axe croise l'axe longitudinal et est perpendiculaire à une tangente au carter au point d'intersection entre l'axe et le carter.

Avantageusement, chaque articulation entre une bielle et la ferrure avant prend la forme d'une liaison pivot dont l'axe est globalement parallèle à l'axe de la liaison pivot du point latéral de fixation qui est du même côté.

Selon un mode de réalisation particulier, l'ensemble propulsif comporte une barre frontale arrangée en partie haute du turboréacteur et dans le plan médian et montée articulée entre une partie avant de la structure rigide et une partie avant du carter intermédiaire. Avantageusement, l'ensemble propulsif comporte un pion de cisaillement avec une première extrémité solidaire de la ferrure avant et projetant une deuxième extrémité vers l'avant et dont l'axe est parallèle à l'axe longitudinal, où l'axe du pion de cisaillement est dans le plan médian, et un logement réalisé dans le carter intermédiaire et sous forme d'un trou dont l'axe est parallèle à l'axe longitudinal et qui est arrangé pour recevoir la deuxième extrémité du pion de cisaillement.

Avantageusement, le trou est oblong avec un grand axe vertical et un petit axe horizontal.

Selon un mode de réalisation particulier, l'ensemble propulsif comporte une attache moteur arrière comportant deux manilles à deux points de fixation disposées symétriquement de part et d'autre du plan médian, où chaque manille est montée articulée entre un sabot de la structure rigide et une languette du carter.

Selon un mode de réalisation particulier, l'ensemble propulsif comporte un pion de cisaillement avec une première extrémité solidaire de la ferrure avant et projetant une deuxième extrémité vers l'avant et dont l'axe est parallèle à l'axe longitudinal, où l'axe du pion de cisaillement est dans le plan médian, et un logement réalisé dans le carter intermédiaire et sous forme d'un trou dont l'axe est parallèle à l'axe longitudinal et qui est arrangé pour recevoir la deuxième extrémité du pion de cisaillement, et l'ensemble propulsif comporte une attache moteur arrière avec une manille à deux points de fixation, disposée au niveau du plan médian, où la manille est montée articulée entre un sabot de la structure rigide et une languette du carter.

Avantageusement, le trou est oblong avec un grand axe vertical et un petit axe horizontal. L'invention propose également un aéronef comportant une voilure et un ensemble propulsif selon l'une des variantes précédentes dont la structure rigide est fixée sous la voilure.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente une vue de côté d'un aéronef selon l'invention,
[Fig. 2] est une vue en perspective d'un ensemble propulsif selon un mode de réalisation de l'invention,
[Fig. 3] est une vue en perspective de l'ensemble propulsif de la Fig. 2 sans le turboréacteur selon le mode de réalisation de l'invention,
[Fig. 4] est une vue de face d'un premier exemple d'une attache moteur arrière mise en œuvre dans l'ensemble propulsif selon une première variante de l'invention, et
[Fig. 5] est une vue de face d'un deuxième exemple d'une attache moteur arrière mise en œuvre dans l'ensemble propulsif selon une deuxième variante de l'invention.

### EXPOSÉ DÉTAILLÉ DE MODES DE RÉALISATION

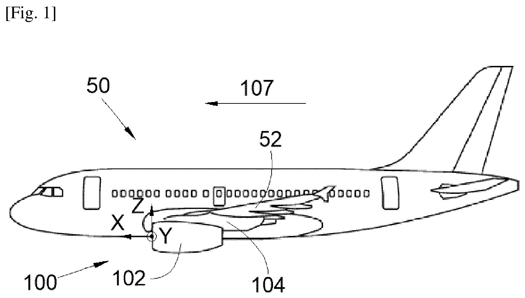

La Fig. 1 montre un aéronef 50 qui présente une voilure 52 sous laquelle est monté un ensemble propulsif 100 selon l'invention et qui comporte un turboréacteur 102 logé ici dans une nacelle et un mât d'accrochage 104.

Par convention, on appelle X l'axe longitudinal du turboréacteur 102, cet axe X étant parallèle à une direction longitudinale de ce turboréacteur 102. D'autre part, on appelle Y, l'axe transversal du turboréacteur 102 qui est horizontal lorsque l'aéronef est au sol, et Z, l'axe vertical ou hauteur verticale lorsque l'aéronef est au sol, ces trois axes X, Y et Z étant orthogonaux entre eux.

D'autre part, les termes " avant " et " arrière " sont à considérer par rapport à une direction d'avancement de l'aéronef 50 lors du fonctionnement du turboréacteur 102, cette direction étant représentée schématiquement par la flèche 107.

Le mât d'accrochage 104 est globalement symétrique par rapport à un plan médian vertical XZ du turboréacteur 102 qui passe par l'axe longitudinal X du turboréacteur 102 et qui est appelé par la suite plan médian P.

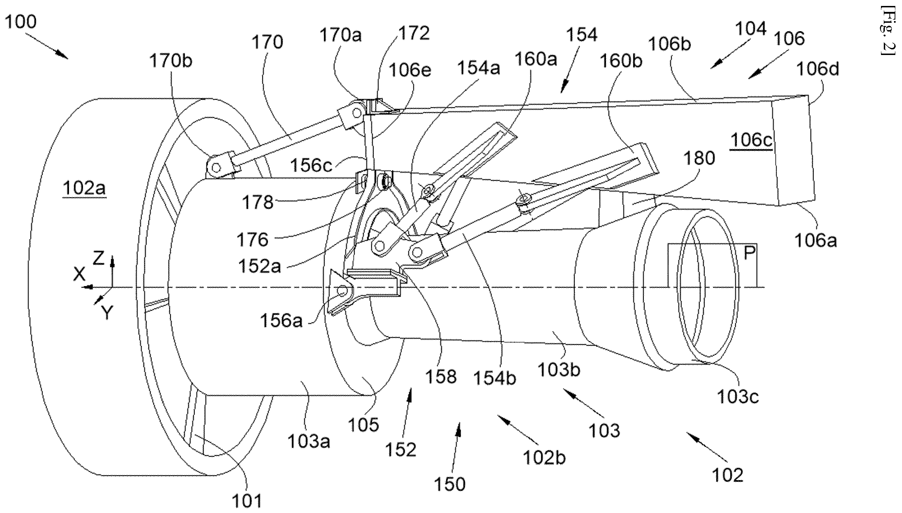

La Fig. 2 montre l'ensemble propulsif 100 qui comporte le turboréacteur 102 et le mât d'accrochage 104 par lequel le turboréacteur 102 est fixé à la voilure 52 (non représentée sur la Fig. 2). Le mât d'accrochage 104 est ici représenté par sa structure rigide 106, également appelée structure primaire, portant des éléments de fixation 150 destinés à l'accrochage du turboréacteur 102 sous la structure rigide 106. La structure rigide 106 s'étend selon l'axe longitudinal X entre une extrémité avant et une extrémité arrière entre lesquelles se trouve une zone médiane.

Dans le mode de réalisation de l'invention présenté sur la Fig. 2, la structure rigide 106 prend la forme d'un caisson qui comporte une paroi inférieure 106a, une paroi supérieure 106b, deux parois latérales 106c-d de part et d'autre du plan médian P et une paroi frontale 106e orientée vers l'avant. La structure rigide 106 est fixée à la voilure 52 par un système de fixation qui n'est pas représenté, car il est hors du périmètre de l'invention et peut prendre toutes formes connues par l'homme du métier.

Dans le mode de réalisation de l'invention présenté à la Fig. 2, le turboréacteur 102 comporte de l'avant vers l'arrière, un carter de soufflante 102a dans lequel est montée une soufflante matérialisant un rotor et un stator 102b qui comporte un carter 103 dans lequel sont logés successivement des étages de compression, une chambre de combustion, des étages de turbine et une tuyère d'éjection. Le flux d'air qui pénètre par le carter de soufflante 102a est divisé en un flux primaire qui s'écoule dans le stator 102b et un flux secondaire qui s'écoule autour du stator 102b.

Dans le mode de réalisation de l'invention présenté à la Fig. 2, le carter 103 est constitué de l'avant vers l'arrière, d'un carter intermédiaire 103a, d'un carter central 103b et d'un carter arrière 103c qui sont solidaires entre eux. Dans le carter central 103b sont logés les étages de compression et la chambre de combustion alors que le carter arrière 103c accueille les étages de turbine.

Le carter intermédiaire 103a est disposé entre le carter de soufflante 102a et le carter central 103b et il est solidaire dudit carter de soufflante 102a par tous moyens de fixation appropriés tels que des bras radiaux 101.

Le carter central 103b s'étend à l'arrière du carter intermédiaire 103a et présente un diamètre inférieur ce qui permet de dégager une face arrière 105 du carter intermédiaire 103a qui s'étend ici dans un plan globalement vertical YZ, c'est-à-dire perpendiculaire à l'axe longitudinal X.

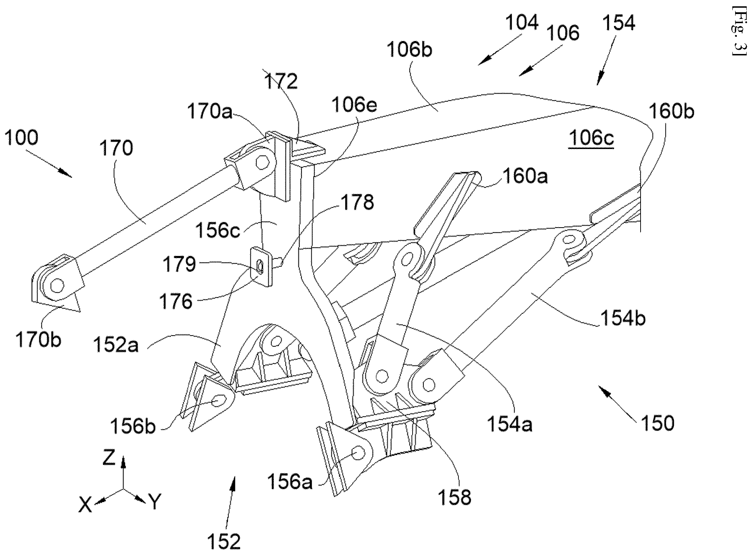

Les éléments de fixation 150 comportent une attache moteur avant 152 et une attache moteur intermédiaire 154. La Fig. 3 montre les éléments de fixation 150 sans le turboréacteur 102. L'attache moteur avant 152 comporte une ferrure avant 152a qui prend la forme d'un fer à cheval qui se positionne autour et au-dessus du carter central 103b, en particulier au-dessus du demi-secteur supérieur de la zone avant du carter central 103b, et à l'arrière du carter intermédiaire 103a. La ferrure avant 152a est fixée de manière articulée par deux points latéraux de fixation 156a-b au carter intermédiaire 103a et plus particulièrement à sa face arrière 105 et de manière rigide par une zone supérieure de fixation 156c à la structure rigide 106 et plus particulièrement à la paroi frontale 106e. Une partie de la ferrure avant 152a est ainsi plaquée et fixée contre la paroi frontale 106e.

La zone supérieure de fixation 156c est disposée en partie haute au niveau du plan médian P et les points latéraux de fixation 156a-b sont disposés de part et d'autre du plan médian P.

La zone supérieure de fixation 156c assure une liaison complète ou encastrement entre la ferrure avant 152a et la structure rigide 106. La fixation est réalisée par exemple à l'aide d'éléments de visserie, de rivets, ou autres sur toute la périphérie de la paroi frontale 106e en liaison avec les parois inférieure 106a, supérieure 106b et latérales 106c-d de la structure rigide 106.

Chaque point latéral de fixation 156a-b assure une liaison pivot autour d'une direction d'articulation entre la ferrure avant 152a et la face arrière 105 du carter intermédiaire 103a. Chaque liaison pivot est réalisée ici par une chape femelle solidaire de la face arrière 105 du carter intermédiaire 103a et une chape mâle solidaire de la ferrure avant 152a et emmanchée dans la chape femelle et par un axe qui traverse la chape femelle et s'emmanche dans la chape mâle. Dans le mode de réalisation de l'invention présenté ici, chaque point latéral de fixation 156a-b est ici globalement à la même hauteur que l'axe longitudinal X et, vu de derrière, l'axe de chaque liaison pivot est orienté à environ 45° par rapport à l'axe transversal Y, dans le sens horaire pour le point latéral de fixation 156a à bâbord et dans le sens anti-horaire pour le point latéral de fixation 156b à tribord. D'une manière générale, la direction de l'axe varie de 10° à 90° par rapport à l'axe vertical Z en fonction de la position azimutale des points latéraux de fixation 156a-b et préférentiellement, l'axe croise l'axe longitudinal X et est perpendiculaire à la tangente au carter 103 au point d'intersection entre l'axe et le carter 103, et en d'autres termes, l'axe est perpendiculaire au plan défini par le point latéral de fixation 156a-b et les bielles 154a-b qui sont du même côté.

L'attache moteur intermédiaire 154 qui constitue un dispositif de reprise des efforts de poussée du turboréacteur 102 comprend deux paires de bielles 154a-b, où chaque paire est disposée d'un côté du plan médian P et articulées, d'une part, à l'avant sur la ferrure avant 152a, et, d'autre part, à l'arrière sur la structure rigide 106 au niveau de la zone médiane, et plus particulièrement sur la paroi latérale 106c-d qui est du même côté.

Chaque paire de bielles 154a-b comporte une bielle avant 154a et une bielle arrière 154b et chacune est montée articulée à l'avant sur la ferrure avant 152a et à l'arrière sur la paroi latérale 106c-d.

Dans le mode de réalisation de l'invention présenté ici, la ferrure avant 152a comporte pour chaque paire de bielles 154a-b, une extension 158 qui s'étend vers l'arrière de chaque point latéral de fixation 156a-b et sur laquelle chaque bielle 154a-b est montée articulée autour d'une liaison pivot.

De la même manière, l'attache moteur intermédiaire 154 comporte pour chaque bielle 154a-b, une ferrure 160a-b fixée rigidement à la paroi latérale 106c-d considérée et sur laquelle est montée articulée autour d'une liaison pivot ladite bielle 154a-b.

Dans le mode de réalisation de l'invention présenté ici, chaque extrémité d'une bielle 154a-b présente une chape femelle dans laquelle est emmanchée une chape mâle constituée respectivement d'une partie de l'extension 158 ou d'une partie de la ferrure 160 a-b respective et où un axe traverse la chape femelle et s'emmanche dans la chape mâle. Chaque axe de la liaison pivot correspondant à une extension 158 est globalement parallèle à l'axe de la liaison pivot du point latéral de fixation 156a-b qui est du même côté.

Avec un tel arrangement, l'encombrement de l'attache moteur avant est réduit dans le flux secondaire et induit moins de protubérance aérodynamique au niveau du capotage de la veine secondaire.

Chaque point latéral de fixation 156a-b permet une reprise des efforts selon deux directions et principalement orientées selon les axes Z et X.

Selon le mode de réalisation de l'invention présenté sur la Fig. 2, l'ensemble propulsif 100 comporte une barre frontale 170 qui est montée articulée entre la structure rigide 106 et le carter intermédiaire 103a. La barre frontale 170 est arrangée en partie haute du turboréacteur 102 et dans le plan médian P. De manière non limitative, la barre frontale 170 peut se présenter sous la forme d'une bielle ou d'une manille.

La barre frontale 170 est plus particulièrement montée articulée entre une partie avant de la structure rigide 106, ici la partie avant de la paroi supérieure 106b, et une partie avant du carter intermédiaire 103a.

Chaque articulation de la barre frontale 170 à la structure rigide 106 et au carter intermédiaire 103a, prend ici la forme d'une liaison pivot dont l'axe et est parallèle à l'axe transversal Y. La barre frontale 170 assure la reprise des efforts selon une direction principalement orientée selon l'axe X et en combinaison avec les points latéraux de fixations 156a-b, reprend le moment de flexion My.

Dans le mode de réalisation de l'invention présenté ici, chaque liaison pivot est réalisée ici par une chape femelle solidaire d'une extrémité de la barre frontale 170 et respectivement d'une première chape mâle 170a solidaire de la structure rigide 106 ou d'une deuxième chape mâle 170b solidaire du carter intermédiaire 103a, et où un axe traverse la chape femelle et s'emmanche dans la chape mâle 170a-b parallèlement à l'axe transversal Y.

Dans le mode de réalisation de l'invention présenté ici, la première chape mâle 170a est fixée rigidement à la paroi supérieure 106b par l'intermédiaire d'une cornière en L 172 et à la ferrure avant 152a par tous moyens appropriés comme des éléments de visserie, des rivets, des points de soudure, etc.

Dans le premier mode de réalisation, l'ensemble propulsif 100 comporte en outre un pion de cisaillement 176 (également appelé « spigot ») qui est cylindrique, qui présente une première extrémité solidaire de la ferrure avant 152a et qui projette une deuxième extrémité vers l'avant et dont l'axe est parallèle à l'axe longitudinal X. L'axe du pion de cisaillement 176 est dans le plan médian P.

L'ensemble propulsif 100 comporte également un logement 178 réalisé dans le carter intermédiaire 103a et plus particulièrement ici de la face arrière 105.

Le logement 178 prend la forme d'un trou 179 dont l'axe est parallèle à l'axe longitudinal X et qui est arrangé pour recevoir la deuxième extrémité du pion de cisaillement 176. Dans le mode de réalisation de l'invention présenté ici, le trou 179 est oblong avec un grand axe vertical, c'est-à-dire parallèle à l'axe vertical Z, et un petit axe horizontal, c'est-à-dire parallèle à l'axe transversal Y, où la largeur du trou 179 est adaptée au diamètre du pion de cisaillement 176 pour assurer un contact 'ajusté' glissant avec le pion de cisaillement 176. Le logement 178 et le pion de cisaillement 176 sont ainsi libres en rotation l'un par rapport à l'autre et libres en translation verticalement l'un par rapport à l'autre.

Le pion de cisaillement 176 assure la reprise des efforts selon une direction orientée selon l'axe transversal Y. On obtient ainsi un montage dit ajusté sans jeu selon l'axe transversal Y et non ajusté avec un jeu selon l'axe vertical Z.

Selon une première variante de l'invention, la barre frontale 170 et le pion de cisaillement 176 sont remplacés par une attache moteur arrière 180 qui est montée articulée entre la structure rigide 106, et plus particulièrement ici la paroi inférieure 106a, et le carter 103, et plus particulièrement ici le carter central 103b.

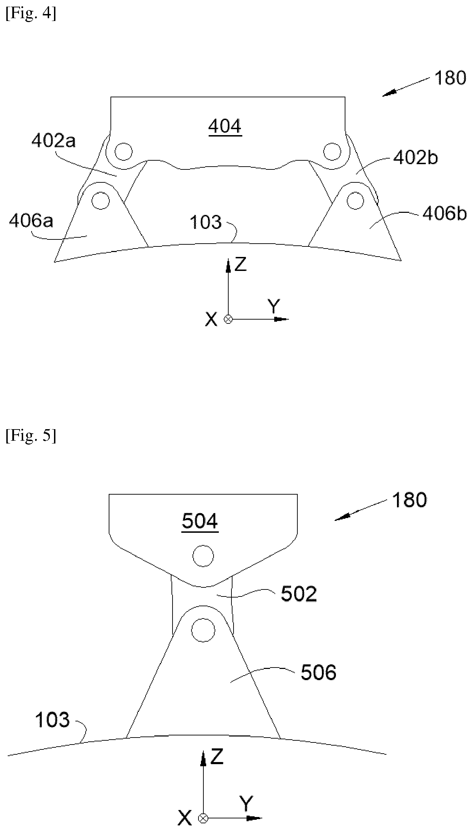

Un exemple d'une attache moteur arrière 180 est représenté à la Fig. 4. L'attache moteur arrière 180 comporte deux manilles 402a-b à deux points de fixation et elles sont disposées symétriquement de part et d'autre du plan médian P. Chaque manille 402a-b est montée articulée entre un sabot 404 de la structure rigide 106, et plus particulièrement de la paroi inférieure 106a, et une languette 406a-b du carter 103 et plus particulièrement du carter central 103b.

Chaque articulation prend la forme d'une liaison pivot dont l'axe est parallèle à l'axe longitudinal X et elle est réalisée par exemple sous la forme d'une liaison du type chape. Une telle attache moteur arrière 180 assure la reprise des efforts selon deux directions principalement orientées selon les axes Z et Y et en combinaison avec le plan d'attache moteur avant, reprend le moment de flexion My.

Selon une deuxième variante de l'invention, le pion de cisaillement 176 est conservé et la barre frontale 170 est remplacée par une attache moteur arrière 180 qui est montée articulée entre la structure rigide 106, et plus particulièrement ici la paroi inférieure 106a, et le carter 103, et plus particulièrement ici le carter central 103b. On conserve ainsi le montage dit ajusté sans jeu selon l'axe transversal Y et non ajusté avec un jeu selon l'axe vertical Z.

Un exemple d'une attache moteur arrière 180 est représenté à la Fig. 5. L'attache moteur arrière 180 comporte une manille 502 à deux points de fixation qui est disposée au niveau du plan médian P. La manille 502 est montée articulée entre un sabot 504 de la structure rigide 106, et plus particulièrement de la paroi inférieure 106a, et une languette 506 du carter 103 et plus particulièrement du carter central 103b.

Chaque articulation prend la forme d'une liaison pivot dont l'axe est parallèle à l'axe longitudinal X et elle est réalisée par exemple sous la forme d'une liaison du type chape. Une telle attache moteur arrière 180 assure la reprise des efforts selon une direction orientée selon l'axe vertical Z, en combinaison avec le plan d'attache moteur avant, reprend le moment de flexion My.

Il convient de noter que dans l'ensemble des modes de réalisation de l'invention proposés, le système d'interface entre le moteur et le mât réacteur est dit « isostatique », c'est-à-dire que l'ensemble des six degrés de liberté (3 translations / 3 rotations) sont bloqués et permettent un transfert « efficace et robuste » des efforts et des moments.

Le positionnement des deux points latéraux de fixation 156a-b et l'envergure de la ferrure 152a sont ici proposés sur un secteur angulaire compris entre 10h et 2h. Cependant, ces éléments peuvent être proposés sur un secteur angulaire compris entre 9h et 3h sans changer la portée de l'invention.

Enfin, le positionnement des deux points latéraux de fixation 156a-b peut être disposé radialement sur l'ensemble de la face arrière 105, c'est-à-dire entre le diamètre interne et le diamètre externe.

## Revendications

1. Ensemble propulsif (100) d'un aéronef (50), ledit ensemble propulsif (100) comportant
- un turboréacteur (102) comportant un carter (103) présentant de l'avant vers l'arrière un carter intermédiaire (103a) et un carter central (103b) autour d'un axe longitudinal (X) et présentant un plan médian (P) vertical passant par l'axe longitudinal (X), où le carter central (103b) s'étend à l'arrière du carter intermédiaire (103a) et présente un diamètre inférieur pour dégager une face arrière (105) du carter intermédiaire (103a),
- un mât d'accrochage (104) présentant une structure rigide (106) avec une paroi frontale (106e) et deux parois latérales (106c-d) de part et d'autre du plan médian (P),
- une attache moteur avant (152) comportant une ferrure avant (152a) positionnée autour et au-dessus du carter central (103b) et à l'arrière du carter intermédiaire (103a), où la ferrure avant (152a) est fixée de manière rigide par une zone supérieure de fixation (156c) à la paroi frontale (106e), où la zone supérieure de fixation (156c) est disposée en partie haute au niveau du plan médian (P), et
- une attache moteur intermédiaire (154),
ledit ensemble propulsif (100) étant **caractérisé en ce que** :
- la ferrure avant (152a) est fixée de manière articulée par deux points latéraux de fixation (156a-b) à la face arrière (105), où les points latéraux de fixation (156a-b) sont disposés de part et d'autre du plan médian (P), et
- l'attache moteur intermédiaire (154) comprend deux paires de bielles (154a-b), où chaque paire est disposée d'un côté du plan médian (P) et comporte une bielle avant (154a) et une bielle arrière (154b), où chacune est montée articulée entre la ferrure avant (152a) et la paroi latérale (106c-d) de la structure rigide (106) qui est du même côté.

2. Ensemble propulsif (100) selon la revendication 1, **caractérisé en ce que** chaque point latéral de fixation (156a-b) assure une liaison pivot dont l'axe croise l'axe longitudinal (X) et est perpendiculaire à une tangente au carter (103) au point d'intersection entre l'axe et le carter (103).

3. Ensemble propulsif (100) selon la revendication 2, **caractérisé en ce que** chaque articulation entre une bielle (154a-b) et la ferrure avant (152a) prend la forme d'une liaison pivot dont l'axe est globalement parallèle à l'axe de la liaison pivot du point latéral de fixation (156a-b) qui est du même côté.

4. Ensemble propulsif (100) selon l'une des revendications 1 à 3, **caractérisé en ce qu'**il comporte une barre frontale (170) arrangée en partie haute du turboréacteur (102) et dans le plan médian (P) et montée articulée entre une partie avant de la structure rigide (106) et une partie avant du carter intermédiaire (103a).

5. Ensemble propulsif (100) selon la revendication 4, **caractérisé en ce qu'**il comporte un pion de cisaillement (176) avec une première extrémité solidaire de la ferrure avant (152a) et projetant une deuxième extrémité vers l'avant et dont l'axe est parallèle à l'axe longitudinal (X), où l'axe du pion de cisaillement (176) est dans le plan médian (P), et un logement (178) réalisé dans le carter intermédiaire (103a) et sous forme d'un trou (179) dont l'axe est parallèle à l'axe longitudinal (X) et qui est arrangé pour recevoir la deuxième extrémité du pion de cisaillement (176).

6. Ensemble propulsif (100) selon la revendication 5, **caractérisé en ce que** le trou (179) est oblong avec un grand axe vertical et un petit axe horizontal.

7. Ensemble propulsif (100) selon l'une des revendications 1 à 3, **caractérisé en ce qu'**il comporte une attache moteur arrière (180) comportant deux manilles (402a-b) à deux points de fixation disposées symétriquement de part et d'autre du plan médian (P) où chaque manille (402a-b) est montée articulée entre un sabot (404) de la structure rigide (106) et une languette (406a-b) du carter (103).

8. Ensemble propulsif (100) selon l'une des revendications 1 à 3, **caractérisé en ce qu'**il comporte un pion de cisaillement (176) avec une première extrémité solidaire de la ferrure avant (152a) et projetant une deuxième extrémité vers l'avant et dont l'axe est parallèle à l'axe longitudinal (X), où l'axe du pion de cisaillement (176) est dans le plan médian (P), et un logement (178) réalisé dans le carter intermédiaire (103a) et sous forme d'un trou (179) dont l'axe est parallèle à l'axe longitudinal (X) et qui est arrangé pour recevoir la deuxième extrémité du pion de cisaillement (176), et **en ce que** l'ensemble propulsif (100) comporte une attache moteur arrière (180) avec une manille (502) à deux points de fixation disposée au niveau du plan médian (P), où la manille (502) est montée articulée entre un sabot (504) de la structure rigide (106) et une languette (506) du carter (103).

9. Ensemble propulsif (100) selon la revendication 8, **caractérisé en ce que** le trou (179) est oblong avec un grand axe vertical et un petit axe horizontal.

10. Aéronef (100) comportant une voilure (52) et un ensemble propulsif (100) selon l'une des revendications précédentes dont la structure rigide (106) est fixée sous la voilure (52).

## Patentansprüche

1. Antriebsbaugruppe (100) eines Flugzeugs (50), wobei die Antriebsbaugruppe (100) umfasst:
- ein Turbinen-Strahltriebwerk (102), das ein Gehäuse (103) umfasst, das von vorne nach hinten ein Zwischengehäuse (103a) und ein zentrales Gehäuse (103b) um eine Längsachse (X) umfasst und eine vertikale Mittelebene (P) aufweist, die durch die Längsachse (X) verläuft, wobei sich das zentrale Gehäuse (103b) auf der Rückseite des Zwischengehäuses (103a) erstreckt und einen geringeren Durchmesser aufweist, um eine hintere Fläche (105) des Zwischengehäuses (103a) freizulegen,
- einen Aufhängungspylon (104), der eine starre Struktur (106) mit einer stirnseitigen Wand (106e) und zwei seitlichen Wänden (106c-d) beidseits der Mittelebene (P) aufweist,
- eine vordere Triebwerksbefestigung (152), die einen vorderen Beschlag (152a) umfasst, der um das und über dem zentralen Gehäuse (103b) und auf der Rückseite des Zwischengehäuses (103a) positioniert ist, wobei der vordere Beschlag (152a) starr über einen oberen Befestigungsbereich (156c) an der stirnseitigen Wand (106e) befestigt ist, wobei der obere Befestigungsbereich (156c) im oberen Teil an der Mittelebene (P) angeordnet ist, und
- eine Zwischentriebwerksbefestigung (154), wobei die Antriebsbaugruppe (100) **dadurch gekennzeichnet ist, dass**:
- der vordere Beschlag (152a) gelenkig über zwei seitliche Befestigungspunkte (156a-b) an der hinteren Fläche (105) befestigt ist, wobei die seitlichen Befestigungspunkte (156a-b) beidseits der Mittelebene (P) angeordnet sind, und
- die Zwischentriebwerksbefestigung (154) zwei Lenkerpaare (154a-b) umfasst, wobei jedes Paar auf einer Seite der Mittelebene (P) angeordnet ist und einen vorderen Lenker (154a) und einen hinteren Lenker (154b) umfasst, wobei jeder gelenkig zwischen dem vorderen Beschlag (152a) und der seitlichen Wand (106c-d) der starren Struktur (106) montiert ist, die auf derselben Seite ist.

2. Antriebsbaugruppe (100) nach Anspruch 1, **dadurch gekennzeichnet, dass** jeder seitliche Befestigungspunkt (156a-b) eine Schwenkverbindung gewährleistet, deren Achse die Längsachse (X) kreuzt und senkrecht zu einer Tangete an dem Gehäuse (103) im Schnittpunkt zwischen der Achse und dem Gehäuse (103) ist.

3. Antriebsbaugruppe (100) nach Anspruch 2, **dadurch gekennzeichnet, dass** jedes Gelenk zwischen einem Lenker (154a-b) und dem vorderen Beschlag (152a) die Form einer Schwenkverbindung annimmt, deren Achse insgesamt parallel zu der Achse der Schwenkverbindung des seitlichen Befestigungspunkts (156a-b) ist, der auf derselben Seite ist.

4. Antriebsbaugruppe (100) nach einem der Ansprüche 1 bis 3, **dadurch gekennzeichnet, dass** sie einen stirnseitigen Stab (170) umfasst, der im oberen Teil des Turbinen-Strahltriebwerk (102) und in der Mittelebene (P) eingerichtet ist und gelenkig zwischen einem vorderen Teil der starren Struktur (106) und einem vorderen Teil des Zwischengehäuses (103a) montiert ist.

5. Antriebsbaugruppe (100) nach Anspruch 4, **dadurch gekennzeichnet, dass** sie einen Scherstift (176) mit einem mit dem vorderen Beschlag (152a) fest verbundenen ersten Ende und einem nach vorne ragenden zweiten Ende und einer parallel zu der Längsachse (X) verlaufenden Achse umfasst, wobei die Achse des Scherstifts (176) in der Mittelebene (P) ist, und eine Aufnahme (178), die in dem Zwischengehäuse (103a) ausgeführt ist und in Form eines Lochs (179) vorliegt, dessen Achse parallel zu der Längsachse (X) ist und das dazu eingerichtet ist, das zweite Ende des Scherstifts (176) aufzunehmen.

6. Antriebsbaugruppe (100) nach Anspruch 5, **dadurch gekennzeichnet, dass** das Loch (179) länglich mit einer großen vertikalen Achse und einer kleinen horizontalen Achse ist.

7. Antriebsbaugruppe (100) nach einem der Ansprüche 1 bis 3, **dadurch gekennzeichnet, dass** sie eine hintere Triebwerksbefestigung (180) umfasst, die zwei Bügel (402a-b) mit zwei Befestigungspunkten umfasst, die symmetrisch beidseits der Mittelebene (P) angeordnet sind, wobei jeder Bügel (402a-b) gelenkig zwischen einem Schuh (404) der starren Struktur (106) und einer Lasche (406a-b) des Gehäuses (103) montiert ist.

8. Antriebsbaugruppe (100) nach einem der Ansprüche 1 bis 3, **dadurch gekennzeichnet, dass** sie einen Scherstift (176) mit einem mit dem vorderen Beschlag (152a) fest verbundenen ersten Ende und einem nach vorne ragenden zweiten Ende und einer parallel zu der Längsachse (X) verlaufenden Achse umfasst, wobei die Achse des Scherstifts (176) in der Mittelebene (P) ist, und eine Aufnahme (178), die in dem Zwischengehäuse (103a) ausgeführt ist und in Form eines Lochs (179) vorliegt, dessen Achse parallel zu der Längsachse (X) ist und das dazu eingerichtet ist, das zweite Ende des Scherstifts (176) aufzunehmen, und dass die Antriebsbaugruppe (100) eine hintere Triebwerksbefestigung (180) mit einem Bügel (502) mit zwei Befestigungspunkten umfasst, die an der Mittelebene (P) angeordnet ist, wobei der Bügel (502) gelenkig zwischen einem Schuh (504) der starren Struktur (106) und einer Lasche (506) des Gehäuses (103) montiert ist.

9. Antriebsbaugruppe (100) nach Anspruch 8, **dadurch gekennzeichnet, dass** das Loch (179) länglich mit einer großen vertikalen Achse und einer kleinen horizontalen Achse ist.

10. Flugzeug (100), umfassend eine Tragfläche (52) und eine Antriebsbaugruppe (100) nach einem der vorhergehenden Ansprüche, deren starre Struktur (106) unter der Tragfläche (52) befestigt ist.

## Claims

1. Propulsion assembly (100) for an aircraft (50), said propulsion assembly (100) having:
- a jet engine (102) having a casing (103) having, from the front to the rear, an intermediate casing (103a) and a core casing (103b) about a longitudinal axis (X) and having a vertical median plane (P) passing through the longitudinal axis (X), wherein the core casing (103b) extends to the rear of the intermediate casing (103a) and has a smaller diameter so as to free up a rear face (105) of the intermediate casing (103a),
- an attachment pylon (104) having a rigid structure (106) with a frontal wall (106e) and two lateral walls (106c-d) on either side of the median plane (P),
- a front engine attachment (152) having a front fitting (152a) positioned around and above the core casing (103b) and to the rear of the intermediate casing (103a), wherein the front fitting (152a) is fastened in a rigid manner via an upper fastening zone (156c) to the frontal wall (106e), wherein the upper fastening zone (156c) is arranged in an upper part on the median plane (P), and
- an intermediate engine attachment (154), said propulsion assembly (100) being **characterized in that**:
- the front fitting (152a) is fastened in an articulated manner via two lateral fastening points (156a-b) to the rear face (105), wherein the lateral fastening points (156a-b) are arranged on either side of the median plane (P), and
- the intermediate engine attachment (154) comprises two pairs of link rods (154a-b), wherein each pair is arranged on one side of the median plane (P) and has a front link rod (154a) and a rear link rod (154b), wherein each of said link rods is mounted in an articulated manner between the front fitting (152a) and that lateral wall (106c-d) of the rigid structure (106) which is on the same side.

2. Propulsion assembly (100) according to Claim 1, **characterized in that** each lateral fastening point (156a-b) provides a pivot connection, the axis of which intersects the longitudinal axis (X) and is perpendicular to a tangent to the casing (103) at the point of intersection between the axis and the casing (103).

3. Propulsion assembly (100) according to Claim 2, **characterized in that** each articulation between a link rod (154a-b) and the front fitting (152a) takes the form of a pivot connection, the axis of which is roughly parallel to the axis of the pivot connection of the lateral fastening point (156a-b) which is on the same side.

4. Propulsion assembly (100) according to one of Claims 1 to 3, **characterized in that** it has a frontal bar (170) arranged in the upper part of the jet engine (102) and in the median plane (P) and mounted in an articulated manner between a front part of the rigid structure (106) and a front part of the intermediate casing (103a).

5. Propulsion assembly (100) according to Claim 4, **characterized in that** it has a shear pin (176) with a first end secured to the front fitting (152a) and projecting a second end towards the front, and the axis of said pin is parallel to the longitudinal axis (X), wherein the axis of the shear pin (176) is in the median plane (P), and a cutout (178) formed in the intermediate casing (103a) and in the form of a hole (179), the axis of which is parallel to the longitudinal axis (X) and which is arranged so as to receive the second end of the shear pin (176).

6. Propulsion assembly (100) according to Claim 5, **characterized in that** the hole (179) is oblong with a vertical major axis and a horizontal minor axis.

7. Propulsion assembly (100) according to one of Claims 1 to 3, **characterized in that** it has a rear engine attachment (180) having two shackles (402a-b) with two fastening points that are arranged symmetrically on either side of the median plane (P), wherein each shackle (402a-b) is mounted in an articulated manner between a shoe (404) of the rigid structure (106) and a tab (406a-b) of the casing (103).

8. Propulsion assembly (100) according to one of Claims 1 to 3, **characterized in that** it has a shear pin (176) with a first end secured to the front fitting (152a) and projecting a second end towards the front, and the axis of said pin is parallel to the longitudinal axis (X), wherein the axis of the shear pin (176) is in the median plane (P), and a cutout (178) formed in the intermediate casing (103a) and in the form of a hole (179), the axis of which is parallel to the longitudinal axis (X) and which is arranged so as to receive the second end of the shear pin (176), and **in that** the propulsion assembly (100) has a rear engine attachment (180) with a shackle (502) with two fastening points that is arranged on the median plane (P), wherein the shackle (502) is mounted in an articulated manner between a shoe (504) of the rigid structure (106) and a tab (506) of the casing (103).

9. Propulsion assembly (100) according to Claim 8, **characterized in that** the hole (179) is oblong with a vertical major axis and a horizontal minor axis.

10. Aircraft (100) having a wing (52) and a propulsion assembly (100) according to one of the preceding claims, the rigid structure (106) of which is fastened beneath the wing (52).
